# EUROPÄISCHE PATENTSCHRIFT

(11) **EP 2 208 027 B1**
(45) Veröffentlichungstag und Bekanntmachung des Hinweises auf die Patenterteilung: **07.11.2012**
(21) Anmeldenummer: 08801991.4
(22) Anmeldetag: 10.09.2008
(51) Int. Cl.: G01D 5/20

(54) **LAGEGEBER MIT KUNSTSTOFFKÖRPER**
POSITION SENSOR COMPRISING A PLASTIC ELEMENT
CAPTEUR DE POSITION À CORPS EN MATIÈRE PLASTIQUE

(30) Priorität: 09.11.2007 DE 102007053601
(43) Veröffentlichungstag der Anmeldung: 21.07.2010
(73) Patentinhaber: SUMIDA Components & Modules GmbH, 94130 Obernzell (DE)
(72) Erfinder: KRONAWITTER, Rudolf, 94051 Hauzenberg (DE); WIMMER, Willi, 94051 Hauzenberg (DE)
(74) Vertreter: Grünecker, Kinkeldey, Stockmair & Schwanhäusser
(86) Internationale Anmeldenummer: PCT/EP2008/007425
(87) Internationale Veröffentlichungsnummer: WO 2009/059656

(56) Entgegenhaltungen:
- EP-A- 1 801 545
- DE-A1- 3 642 678
- DE-A1- 10 231 980
- DE-A1- 10 320 941

## Beschreibung

Die vorliegende Erfindung betrifft im Allgemeinen Wirbelstromsensoranordnungen, in denen eine Position eines Geberelements relativ zu einer Spulenanordnung auf der Grundlage positionsabhängiger Wirbelstromverluste ermittelt wird, und insbesondere betrifft die vorliegende Erfindung ein Geberelement für eine derartige Sensoranordnung.

In vielen technischen Bereichen ist es erforderlich, die Position eines sich bewegenden Objekts mit einer durch die jeweiligen Einsatzzwecke diktierten Genauigkeit zu bestimmen. Zu diesem Zweck wurden zahlreiche Sensorsysteme entwickelt, in denen zumindest die relative Position zwischen zwei Elementen mit ausreichend hoher Präzision durch beispielsweise optische, elektrische, magnetische und andere Wechselwirkungen gemessen werden kann. Insbesondere in technischen Bereichen, in denen sehr anspruchsvolle Umgebungsbedingungen vorherrschen, etwa hohe Betriebstemperaturen in Verbindung mit hohen magnetischen Feldern, die z. B. durch hohe Betriebsströme hervorgerufen werden können, werden häufig Sensoranordnungen eingesetzt, in denen die positionsabhängige Erzeugung von Wirbelströmen zur Ermittlung der Position einer Komponente herangezogen wird. Dazu wird in einigen Beispielen einer derartigen Wirbelstromsensoranordnung die durch Wirbelströme hervorgerufene Dämpfung einer oder mehrerer Spulen erfasst, wobei die eine oder mehreren Spulen als ortsfeste Komponenten vorgesehen sind, und eine bewegte Komponente eine Spur aus einem geeigneten Material aufweist, die zu einer positionsabhängigen Wirbelstromerzeugung und damit Dämpfung führt. Auf der Grundlage diese ortsabhängigen Wirbelstromerzeugung kann somit durch eine Korrelation der hervorgerufenen Dämpfung, die beispielsweise auf der Grundlage einer Frequenzänderung, Phasenänderung, Amplitudenänderung oder einer Kombination dieser Grö-βen ermittelt werden kann, und der besonderen Gestalt der Spur die Position der sich bewegenden Spur im Verhältnis zu der einen oder der mehreren ortsfesten Spulen bestimmt werden.

Eine wichtige Anwendung in dieser Hinsicht ist die Bestimmung der Lage eines Rotors einer elektrischen Maschine, um damit geeignete Ansteuersignale für das Zuführen geeigneter Strom- und Spannungswerte zu ermitteln. Beispielsweise ist es für viele Anwendungszwecke, in denen sehr variable Drehgeschwindigkeiten und eine moderat große Steuerungsbandbreite für die elektrische Maschine erforderlich sind, wichtig, die Spannungs- bzw. Stromwerte mit hoher zeitlicher Auflösung einzuprägen, wobei in vielen Fällen eine relativ präzise Bestimmung der Lage des Rotors erforderlich ist. So ist es für eine effiziente Betriebsweise von etwa permanent erregten Synchronmaschinen oder auch bürstenlosen Gleichstrommaschinen wichtig, die Stellung des Rotors entsprechend der verwendeten Polzahl der Magnete innerhalb eines Winkelabschnitts mit guter Genauigkeit zu kennen, um die Statorwicklungen mit einem geeigneten Muster bestromen zu können, so dass sich die gewünschte Betriebsweise einstellt. Häufig werden dazu berührungslose Sensormechanismen verwendet, in denen z. B. auf magnetischen Schaltern oder Hallsensoren beruhende Sensoranordnungen eingesetzt werden, die jedoch relativ aufwendig und auch störempfindlich sind, wobei auch in der Regel die erforderliche räumliche Auflösung für viele Anwendungszwecke nicht erreicht wird. Da insbesondere in Anwendungen zur Erfassung der Winkelposition häufig eine räumlich enge Kopplung des Geberelements mit dem Rotor der elektrischen Maschine erforderlich ist, können in der Nähe des Geberelements hohe Ströme bzw. Magnetfelder und auch relativ hohe Temperaturen auftreten, so dass sich hier Sensoren gemäß dem Wirbelstromprinzip besonders bewährt haben, da sie einerseits so aufgebaut werden können, dass sie durch hohe externe Magnetfelder nicht wesentlich gestört werden und andererseits eine hohe räumliche Auflösung der Rotorlage auch zum Zeitpunkt der Aktivierung der Sensoranordnung ermöglichen.

Bei derartigen konventionellen Sensoranordnungen wird typischerweise ein Geberrad eingesetzt, das beispielsweise mit dem Rotor der elektrischen Maschine gekoppelt ist und dessen Umfang eine geeignet ausgebildete Spur aufweist, beispielsweise in Form eines sich sinusförmig ändernden Metallleiters, etwa aus Kupfer oder Aluminium, die von einer Spulenanordnung ausgelesen wird. Dieses Geberrad ist somit in mechanischem Kontakt mit dem Rotor der elektrischen Maschine und muss daher neben der gewünschten Störsicherheit im Hinblick auf hohe magnetische Felder auch den weiteren den Betriebsbedingungen der elektrischen Maschine, beispielsweise im Hinblick auf die vorherrschenden Temperaturen, den erforderlichen Drehzahlbereich, und dergleichen angepasst sein. Andererseits ist im Hinblick auf die Integration des Wirbelstromsensorsystems eine hohe gleichbleibende Präzision auch bei einer Massenfertigung erforderlich, um eine gleichmäßige Funktion der Sensoren ohne aufwendige Justierarbeiten bei der Installation in der Endanwendung zu ermöglichen. In konventionellen Geberrädern erfordern daher in der Regel die anspruchsvollen mechanischen Eigenschaften im Hinblick auf die Festigkeit, Laufruhe sowie die erforderlichen elektrischen Eigenschaften, d. h. die positionsabhängige Einstellung der Leitfähigkeit mittels einer sich etwa sinusförmig ändernden Spule, einen entsprechenden Aufwand bei der Fertigung der Geberräder, deren Endmontage und Justierung.

Angesichts der zuvor beschriebenen Situation ist es eine Aufgabe der vorliegenden Erfindung, ein Geberelement für eine Sensoranordnung auf Wirbelstrombasis bereitzustellen, in welchem die Eigenschaften für mechanische Stabilität und Präzision in Verbindung mit dem erforderlichen elektrischen Verhalten verbessert und/oder diese Eigenschaften bei reduziertem Aufwand erreicht werden können.

Gemäß einem Aspekt der vorliegenden Erfindung wird diese Aufgabe gelöst durch einen Lagegeber zur Erzeugung positionsabhängiger Wirbelstromverluste in einer Sensorspulenanordnung. Der Lagegeber umfasst einen aus Kunststoff aufgebauten Grundkörper mit einer beim Betrieb in Richtung der Sensorspulenanordnung zu orientierenden Oberfläche. Des weiteren umfasst der Lagegeber eine in dem Grundkörper durch Erhebungen in der Oberfläche aus Kunststoff gebildeten Spur, die sich entlang einer vorbestimmten Bewegungsrichtung erstreckt und zumindest in einer zur vorbestimmten Bewegungsrichtung senkrechten Richtung variiert. Des weiteren ist eine Beschichtung vorgesehen, die zumindest auf der Spur vorgesehen ist und ein leitfähiges Material aufweist.

Der erfindungsgemäße Lagegeber weist somit einen aus Kunststoff aufgebauten Grundkörper auf, der damit im Hinblick auf die Materialzusammenstellung als auch auf die Form und Größe in sehr flexibler und effizienter Weise mit hoher Genauigkeit bei geringem Fertigungsaufwand hergestellt werden kann. Dabei ist eine Oberfläche des Lagegebers, d. h. eine Oberfläche, die die zur positionsabhängigen Wirbelstromerzeugung ausgebildete Spur trägt, zunächst durch eine Profilierung des Kunststoffmaterials in ihrer Form vorgegeben, so dass auch die Spur mit hoher Präzision und geringem Aufwand, beispielsweise im gleichen Arbeitsgang wie der Grundkörper, hergestellt werden kann. Somit lässt sich beispielsweise die räumliche Struktur der Spur, die entlang der Bewegungsrichtung, d. h. einer Richtung entlang deren beim Betrieb des Lagegebers eine Detektion des Ortes des Lagegebers im Verhältnis zu der Sensorspulenanordnung erfolgen soll, ausgebildet ist, mit hoher Präzision durch konstruktive Maßnahmen festlegen, etwa durch eine Spritzgussform, während die elektrischen Eigenschaften der Spur durch die Beschichtung eingestellt werden. Auf diese Weise ist einerseits eine gewünschte der jeweiligen Aufgabe angepasste mechanische Stabilität durch das Kunststoffmaterial des Grundkörpers erreichbar, wobei andererseits bei geringem Fertigungsaufwand eine sehr präzise Ausbildung des Spurverlaufs, der letztlich auch für die gewünschte Ortsauflösung sorgt, gewährleistet ist. Die elektrischen Eigenschaften, d. h. die Leitfähigkeit der Spur wird durch die Beschichtung gewährleistet, die somit im Hinblick auf die Auswahl geeigneter Materialien, etwa geeigneter Metalle, Legierungen, Halbleitermaterialien, leitfähige Kunststoffe, und dergleichen ein hohes Maß an Flexibilität bietet, wobei auch das Aufbringen der Beschichtung im Hinblick auf die erreichte Gesamtgenauigkeit der dadurch entstandenen leitfähigen Spur wenig kritisch ist, da die positionsabhängige Leitfähigkeit der Spur im Wesentlichen durch die Geometrie des in dem Kunststoffmaterial ausgebildeten Profils gegeben ist.

Gemäβ der Erfindung ist die Spur als eine Erhebung in der Oberfläche ausgebildet. D. h., in dieser Ausführungsform kann die der Sensorspulenanordnung beim Betrieb zugewandete Oberfläche eine geeignet gestaltete Erhebung entlang der Bewegungsrichtung aufweisen, die die gewünschte räumliche Variation aufweist. Auf Grund der Erhabenheit der in der Oberfläche ausgebildeten Spur ergibt sich automatisch ein unterschiedlicher Abstand von erhabenen Bereichen zu nicht erhabenen Bereichen in Bezug auf die Sensorspulenanordnung während des Betriebs, so dass konstruktionsbedingt ein deutlicher Unterschied im Wirbelstromverhalten zwischen der im Vergleich zur Oberfläche der Spur abgesenkten Oberfläche des Grundkörpers erreicht wird, die somit einen wesentlichen geringeren Einfluss auf die Wirbelstromerzeugung ausübt, auch wenn die Oberfläche teilweise oder vollständig mit einem leitenden Material zur Vereinfachung des Beschichtungsvorgangs beschichtet ist.

In einer weiteren vorteilhaften Ausführungsform ist eine Höhe der Spur entlang der vorbestimmten Bewegungsrichtung konstant und eine Breite der Spur ist entlang der vorbestimmten Bewegungsrichtung variabel. D. h., die lageabhängige Fähigkeit der Wirbelstromerzeugung wird durch eine laterale Variation, d. h. durch eine Änderung der Breite der Spur hervorgerufen, während sich die Spur entsprechend einem im Wesentlichen konstanten Wert von der Oberfläche abhebt.

In einer weiteren vorteilhaften Ausbildung variiert die Höhe der Spur entlang der vorbestimmten Bewegungsrichtung. Somit kann in dieser Ausführungsform eine positionsabhängige Wirbelstromerzeugung durch eine variierende Höhe der Spur und damit durch einen variierenden Abstand der Spuroberfläche und damit der Beschichtung, die als eine Signalfläche dient, in Bezug auf die ortsfeste Sensorspulenanordnung erreicht werden. Eine entsprechende Gestaltung der Topographie der Spur kann in dem Kunststoffgrundkörper in effizienter Weise erreicht werden, indem geeignete Fertigungsverfahren, etwa ein Spritzgussverfahren oder dergleichen eingesetzt werden. Damit lässt sich ein geeignetes Höhenprofil in reproduzierbarer und effizienter Weise herstellen.

In eine weiteren vorteilhaften Ausgestaltung variiert, in Verbindung mit der Höhe der Spur, auch die Breite der Spur entlang der vorbestimmten Bewegungsrichtung. Auf diese Weise kann das Antwortverhalten der Spur auf ein durch die Sensorspulenanordnung hervorgerufenes variierendes Magnetfeld in sehr effizienter Weise moduliert werden, da somit zwei Freiheitsgrade zur Verfügung stehen, die zusammen eine starke Änderung pro Einheitslänge entlang der Bewegungsrichtung ermöglichen. Ferner lässt sich auf Grund der zweifachen Modulation des Wirbelstromverhaltens ggf. eine geringere Fehlertoleranz erreichen, da sich entsprechende Fertigungsungenauigkeiten in einer Dimension unter Umständen weniger stark auswirken.

In einer vorteilhaften Ausführungsform ist die vorbestimmte Bewegungsrichtung eine Drehbewegung. D. h., der Lagegeber ist ausgebildet, die Position entlang einer einer Drehbewegung entsprechenden gekrümmten Bahn zu detektieren, wobei in einer vorteilhaften Ausführungsform die Winkelposition eines Rotors einer entsprechenden Maschine zumindest über einen gewünschten Winkelbereich detektiert werden kann. In diesem Falle kann der erfindungsgemäße Lagegeber zum Ermitteln der Stellung des Rotors zumindest innerhalb eines interessierenden Winkelabschnitts eingesetzt werden, wie dies beispielsweise bei permanent erregten Synchronmaschinen oder bei bürstenlosen Gleichstrommotoren wichtig ist, um eine optimale Ansteuerung der Statorspulen zu erreichen.

In einer weiteren vorteilhaften Ausgestaltung ist der Grundkörper ausgebildet, an einem Rotor oder einem damit gekoppelten Element einer Rotationsmaschine befestigt zu werden. Auf diese Weise kann der erfindungsgemäße Lagegeber in effizienter und präziser Weise hergestellt werden, wie dies zuvor dargestellt ist, wobei ferner die Möglichkeit geschaffen ist, diesen dann in geeigneter Weise mit einer Rotationsmaschine zu koppeln. Auf diese Weise kann eine unabhängige und somit kostengünstige und präzise Herstellung des Lagegebers erfolgen, wobei ein hohes Maß an Flexibilität bei der Anpassung an die entsprechende Rotationsmaschine durch geeignete Auswahl von beispielsweise Spritzgussformen und dergleichen möglich ist. Somit wird einerseits ein hohes Maß an Unabhängigkeit für die Herstellung der Rotationsmaschine und des Lagegebers gewährleistet, wobei dennoch die Besonderheiten der Rotationsmaschine bei der Ausbildung des Grundkörpers berücksichtigt werden können.

In einer vorteilhaften Ausführungsform ist die Oberfläche senkrecht zu einer Drehachse des Rotors orientiert. D. h. in dieser Anordnung ist die in der Oberfläche eingearbeitete Spur und eine dadurch definierte Signalfläche ebenfalls senkrecht zur Drehachse des Rotors orientiert, so dass sich eine "axiale" Anordnung ergibt, in der die Sensorspulenanordnung somit in axialer Richtung von der Oberfläche und damit der Spur beabstandet ist. Auf diese Weise lässt sich in radialer Richtung ein sehr kompakter Aufbau erreichen, da die Sensorspulenanordnung innerhalb des durch den Rotor vorgegebenen Durchmessers positioniert werden kann, wenn in axialer Richtung ausreichend Bauvolumen vorhanden ist.

In einer weiteren vorteilhaften Ausgestaltung ist die Oberfläche parallel zu einer Drehachse des Rotors orientiert. D. h., die Oberfläche und damit die Spur kann in Umfangsrichtung eines Geberrades ausgebildet sein und damit in radialer Richtung durch die Sensorspulenanordnung ausgelesen werden. Damit lässt sich bei Bedarf ein kompakter Aufbau in axialer Richtung erreichen, was insbesondere bei gewissen Anwendungen im Automobilbereich günstig sein kann, wenn die Rotationsmaschine auf der Antriebswelle zwischen dem Motor und dem entsprechenden Getriebe angeordnet wird.

In einer Ausführungsform ist die Beschichtung zumindest teilweise auch auf der Oberfläche vorgesehen. Wie zuvor erwähnt ist, lässt sich auf Grund der Topographie der Spur eine effiziente Modulation des Wirbelstromverhaltens erreichen, ohne dass die genaue Position der Beschichtung wesentlich ist. D. h., die Beschichtung kann bei Bedarf auf der Spur oder auch teilweise oder ganzflächig auf der Oberfläche aufgetragen werden, wodurch sich, je nach angewendetem Herstellungsverfahren, eine entsprechende Vereinfachung des Herstellungsvorgangs ergeben kann, da kein selektives Aufbringen der Beschichtung erforderlich ist. In anderen Fällen kann die Materialzusammensetzung der Beschichtung so gestaltet sein, dass sie zum einen die gewünschte Leitfähigkeit hervorbringt, andererseits aber auch eine gewünschte Schutzwirkung oder Passivierung für den Grundkörper oder zumindest die Oberfläche ermöglicht, so dass sowohl das elektrische Verhalten als auch die Oberflächeneigenschaft in effizienter Weise eingestellt werden können.

In einer weiteren vorteilhaften Ausführungsform ist die Beschichtung auf zumindest einer weiteren Oberfläche des Grundkörpers vorgesehen. Wie zuvor bereits dargelegt ist, kann die Beschichtung ggf. als Passivierungsmaterial verwendet werden, so dass auch vorteilhafterweise andere Bereiche des Grundkörpers damit abgedeckt werden können. Ferner ergibt sich auf Grund der Möglichkeit, dass zumindest eine weitere Oberfläche des Grundkörpers mit der Beschichtung versehen ist, aus sehr vielen unterschiedlichen Beschichtungsverfahren auszuwählen, die ein selektives Abscheiden nicht oder nur mit großem Aufwand zulassen, so dass hier ein hohes Maß an Flexibilität im Hinblick auf die Materialzusammensetzung der Beschichtung sowie auf die Herstellungskosten gegeben ist.

In einer weiteren Ausführungsform enthält die Beschichtung ein Metall. Auf diese Weise kann die Leitfähigkeit in sehr effizienter Weise hergestellt werden, da eine Vielzahl von Metallen oder Legierungen verfügbar sind, die zum einen eine gewünschte hohe Leitfähigkeit und zum anderen ein geeignetes Verhalten im Hinblick auf die chemische Stabilität, und dergleichen besitzen. In anderen Fällen kann ein geeignetes Metall in der Beschichtung in einer beliebigen Weise enthalten sein, um damit die erforderliche Leitfähigkeit und auch die mechanischen und chemischen Kriterien zu erfüllen.

In einer anschaulichen Ausführungsform ist die Beschichtung als eine Metallschicht vorgesehen. Auf diese Weise lässt sich eine sehr effiziente Modulation der Leitfähigkeit erreichen, wobei die Menge des aufzuwendenden Metalls relativ gering bleiben kann, da etwa die Dicke der Metallschicht in geeigneter Weise eingestellt werden kann. Dabei kann lediglich die Oberfläche der Spur, d. h. die zur Wirbelstromerzeugung hauptsächlich dienende Signalfläche der Spur, oder auch weitere Bereiche des Grundkörpers oder der gesamte Grundkörper mit der Metallschicht versehen werden, wobei sich in diesem Falle eine besonders effiziente Möglichkeit der Herstellung ergibt. D. h., in diesem Falle kann der Grundkörper mit der darin ausgebildeten Spur aus Kunststoff mit hoher Präzision hergestellt werden, während die Metallschicht dann aufgetragen werden kann, ohne dass weitere Maßnahmen zum gezielten Aufbringen oder zum selektiven Entfernen von Bereichen der Beschichtung erforderlich sind.

In einer vorteilhaften Ausführungsform weist die Beschichtung zumindest eine erste Teilschicht und eine darauf ausgebildete zweite Teilschicht auf, wobei die erste und/oder die zweite Teilschicht als leitende Schicht vorgesehen sind. D. h., durch das Vorsehen eines Schichtaufbaus für die Beschichtung ergibt sich ein hohes Maß an Flexibilität bei der Einstellung der gewünschten Eigenschaften, beispielsweise im Hinblick auf die Leitfähigkeit, die Beständigkeit gegenüber anspruchsvollen Umgebungsbedingungen, etwa im Hinblick auf Korrosion, mechanische Festigkeit, und dergleichen. Beispielsweise kann eine Schichtstruktur aufgebracht werden, indem zunächst eine erste Teilschicht unmittelbar auf der Spur bzw. dem Grundkörper aufgebracht wird, die für die erforderliche hohe Haftung für ein nachfolgend darauf abzuscheidendes Material sorgt. Dieses kann dann beispielsweise im Hinblick auf die gewünschte Leitfähigkeit ausgewählt werden. Bei Bedarf können sich eine oder mehrere weitere Schichten je nach Anwendung anschließen. In einer anschaulichen Ausführungsform ist die äußerste Teilschicht der Beschichtung eine leitende Schicht, so dass bei einem vorgegebenen mittleren Abstand zwischen der Sensorspulenanordnung und dem Lagegeber auf Grund der Positionierung der leitenden Schicht als äußerste Schicht eine relativ hohe Empfindlichkeit im Hinblick auf die Wirbelstromerzeugung gegeben ist. In einer anderen Ausführungsform ist die äußerste Teilschicht der Beschichtung als Schutzschicht für eine oder mehrere darunter liegende Teilschichten vorgesehen, wovon zumindest eine als eine leitende Schicht ausgebildet ist. Auf diese Weise können gewünschte leitende Materialien, etwa Metalle, Metalllegierungen, und dergleichen im Hinblick auf ihr elektrisches Verhalten ausgewählt werden, während die äußerste Teilschicht als eine Passivierung dienen kann, so dass beispielsweise die Korrosionsbeständigkeit, die Oberflächenhärte, und dergleichen der Beschichtung als Ganzes in geeigneter Weise eingestellt werden können.

Dabei kann die äußerste Teilschicht als eine moderat dünne Schicht vorgesehen werden, so dass sich der effektive "Luftspalt" zwischen der Sensorspulenanordnung und der Spur nicht unnötig vergrößert. Durch das Vorsehen einer Schutzschicht, die wiederum lediglich auf der Spur bzw. dem leitenden Material oder auch auf größeren Bereichen oder ganzflächig auf dem Grundkörper aufgebracht sein kann, ergibt sich eine erhöhte Zuverlässigkeit bei der Herstellung und bei der Handhabung der Lagegeber bereits vor und während des Einbaus in die gewünschte Anwendung und führt auch zu einer zuverlässigeren Funktionsweise während des Betriebs des Lagegebers auch unter anspruchsvollen Umgebungsbedingungen. In einigen Ausführungsformen sind die als leitendes Material dienende Teilschicht und die als Schutzschicht dienende Teilschicht nicht in gleicher Weise flächendeckend ausgebildet, d. h. die leitende Teilschicht kann im Wesentlichen auf den Bereich der Spur beschränkt sein, während die Schutzschicht über größere Oberflächenbereiche des Grundkörpers hinweg vorgesehen sein kann, um dem Grundkörper als ganzes oder zumindest bereichsweise die durch die Schutzschicht hervorgerufenen Oberflächeneigenschaften zu verleihen.

In einer weiteren vorteilhaften Ausführungsform weist die Beschichtung ein leitendes Halbleitermaterial auf, das somit im Zusammenwirken mit der Spur für das gewünschte positionsabhängige Wirbelstromverhalten sorgt. Beispielsweise können gängige Halbleitermaterialien, etwa amorphes Silizium, und dergleichen in sehr effizienter Weise durch bewährte Verfahren, etwa CVD (chemische Dampfabscheidung) bei relativ geringen Temperaturen auf ein Trägermaterial, d. h. den Grundkörper oder Bereiche davon aufgebracht werden, so dass sich insgesamt geringe Herstellungskosten bei gleichzeitig hoher Präzision des Herstellungsverfahrens ergeben. Auch kann der Grad der gewünschten Leitfähigkeit in weiten Bereichen durch eine entsprechende Dotierung des Halbleitermaterials eingestellt werden. In einigen Fällen kann das leitende Halbleitermaterial auch als eine effiziente Passivierung des Kunststoffmaterials dienen, so dass ggf. keine weitere Schutzschicht erforderlich ist, und dennoch ein hohes Maß an chemischer und mechanischer Widerstandsfähigkeit der Oberfläche des Grundkörpers erreicht wird.

In einer vorteilhaften Ausführungsform ist die Spur in der vorbestimmten Bewegungsrichtung als eine zusammenhängende Spur ausgebildet. D. h., entlang der Bewegungsrichtung, d. h. entlang der Längsrichtung der Spur, ist diese zusammenhängend, so dass sich unabhängig vom Aufbau der Sensorspulenanordnung kontinuierlich Wirbelströme entlang der Bewegungsrichtung hervorrufen lassen. Auf diese Weise kann ein hohes Maß an Ortsauflösung bei vorgegebener Größe des Lagegebers, d. h. bei einer vorgegebenen Länge in der vorbestimmten Bewegungsrichtung, durch eine kontinuierliche Änderung des Wirbelstromverhaltens erreicht werden. Da insbesondere das schließlich erreichte positionsabhängige Wirbelstromverhalten durch konstruktive Maßnahmen, d. h. durch die Ausbildung der Spur in der Oberfläche des Grundkörpers, bewerkstelligt wird, können auch relativ komplexe Formen der Spur, etwa sinusförmige, oder andere krummlinige Formen als zusammenhängende Einheiten hergestellt werden, deren Form sodann auch während der weiteren Montage und auch beim Betrieb im Wesentlichen beibehalten werden kann.

In einer weiteren vorteilhaften Ausführungsform weist die Spur in der vorbestimmten Bewegungsrichtung räumlich periodische Abschnitte auf, so dass innerhalb jedes periodischen Abschnitts eine gewünschte hohe Ortsauflösung erreicht werden kann. In Rotorlagegebern, in denen eine winkelabhängige Positionsangabe eines Rotors innerhalb eines bestimmten Winkelabschnitts entsprechend den verwendeten Polpaaren erforderlich ist, kann somit in effizienter Weise der "elektrische" Drehwinkel in der Spur durch das Vorsehen einer entsprechenden Anzahl an periodischen Abschnitten nachgebildet werden, so dass innerhalb jedes elektrisch relevanten Winkelabschnitts die gewünschte präzise Ansteuerung der Staturspulen der Rotationsmaschine erfolgen kann.

In einer weiteren vorteilhaften Ausführungsform weist der Grundkörper eine in der Oberfläche durch Vertiefungen und/oder Erhebungen aus Kunststoff gebildete weitere Spur auf, die sich entlang der vorbestimmten Bewegungsrichtung erstreckt und zumindest in einer zuvor bestimmten Bewegungsrichtung senkrechten Richtung variiert. Durch das Vorsehen dieser weiteren Spur kann bei Bedarf der Messbereich in geeigneter Weise eingestellt werden, indem etwa die räumliche Auflösung zu Gunsten eines längeren Messweges reduziert wird. D. h., durch eine unterschiedliche Modulierung der Spur und der weiteren Spur kann im Zusammenwirken der Messbereich erweitert werden, indem beispielsweise die Spur für die erforderliche genaue Auflösung innerhalb eines kleinen sich periodisch wiederholenden Abschnittes sorgt, während die weitere Spur eine Identifizierung des gerade abgetasteten Abschnitts ermöglicht.

In einem weiteren Aspekt der vorliegenden Erfindung wird die eingangs genannte Aufgabe durch einen Lagegeber zur Erzeugung positionsabhängiger Wirbelstromverluste in einer Sensorspulenanordnung gelöst. Dabei umfasst der Lagegeber einen aus nicht leitendem Trägermaterial und einem leitenden Material aufgebauten Grundkörper. Ferner ist eine durch das leitende Material definierte Spur vorgesehen, die in dem nicht leitenden Trägermaterial eingebettet ist und sich entlang einer vorbestimmten Bewegungsrichtung erstreckt und zumindest in einer zuvor bestimmten Bewegungsrichtung senkrechten Richtung für die positionsabhängige Wirbelstromerzeugung variiert.

In einer weiteren Ausführungsform ist ferner eine Oberfläche vorgesehen, die beim Betrieb des Lagegebers in Richtung zu der Sensorspulenanordnung zu orientieren ist und im wesentlichen unprofiliert ist.

Durch diese Gestaltungsform des Lagegebers wird leitendes Material in dem Grundkörper so angeordnet, dass darin die Spur gebildet wird, wobei durch die Einbettung der Spur in den Grundkörper und, in der weiteren Ausführungsform auf Grund der die Spur abdeckenden Oberfläche, ein hohes Maß an mechanischer und chemischer Unversehrtheit während sehr anspruchsvoller Betriebsbedingungen erreicht wird. Des weiteren ergibt sich aus diesem Aufbau die Möglichkeit, die zur positionsabhängigen Wirbelstromerzeugung eingesetzte Spur in präziser und reproduzierbarer Weise vorzusehen, wobei eine gewünschte hohe mechanische Stabilität des Lagegebers erreicht wird oder wobei das leitende Material zur Erhöhung der Stabilität des nicht leitenden Trägermaterials des Grundkörpers beitragen kann.

In einer anschaulichen Ausführungsform ist das leitende Material in Form eines profilierten Elements vorgesehen. D. h., das leitende Material in Form des profilierten Elements, beispielsweise in Form eines geeignet gestalteten Metallstücks, kann effizient bei der Herstellung des Grundkörpers in das nicht leitende Trägermaterial eingebracht werden, beispielsweise durch Positionieren in einer Spritzgussform, und dergleichen, so dass sich ein sehr effizienter Herstellungsprozess mit einem hohen Maß an Reproduzierbarkeit erreichen lässt. In einer Ausführungsform weist das profilierte Element erste Bereiche mit einem ersten Abstand zur Oberfläche und zweite Bereiche mit einem zweiten größeren Abstand zur Oberfläche auf. Auf diese Weise kann das profilierte Element als ein stabiles zusammenhängendes Element, beispielsweise ein Metallstück, vorgesehen und in dem nicht leitenden Trägermaterial geeignet positioniert werden, so dass die Bereiche mit dem ersten kleineren Abstand zur Oberfläche als effiziente Spur zur positionsabhängigen Wirbelstromerzeugung dienen können, während die zweite Bereichen mit dem größeren Abstand zur mechanischen Stabilisierung des nicht leitenden Trägermaterials und/oder zur besseren Positionierung des profilierten Elements dienen können, ohne dass ein deutlicher Einfluss auf die Wirbelstromerzeugung stattfindet. D. h., insbesondere wenn das profilierte Element als ein eigenstabiles Element vorgesehen ist, kann somit eine effiziente Positionierung dieses Elements in dem nicht leitenden Trägermaterial sowie eine Erhöhung der Eigenstabilität des Lagegebers erreicht werden.

Vorteilhafterweise ist der Grundkörper zur Positionserfassung für eine Drehbewegung ausgebildet, so dass dieser damit vorteilhaft in Verbindung mit elektrischen Maschinen, beispielsweise permanent erregten Synchronmaschinen, bürstenlosen Gleichstrommaschinen, Asynchronmaschinen, und der gleichen verwendbar ist, wobei der Lagegeber, wie zuvor bereits auch im vorhergehenden Aspekt ausführlich dargestellt ist, im Hinblick auf die geforderten Eigenschaften, beispielsweise chemische Stabilität, mechanische Stabilität, Formgebung, und dergleichen angepasst ist, wobei sich reproduzierbare kostengünstige und präzise Fertigungsverfahren einsetzen lassen. Auch in dieser Variante des Lagegebers, d. h. ein nicht leitendes Trägermaterial mit integriertem leitenden Material in Form einer geeigneten Spur kann sowohl eine axiale als auch eine radiale Ausführung vorgesehen werden, so dass auch im Hinblick auf die Position bzw. die Art der Sensoranordnung ein hohes Maß an Gestaltungsflexibilität erreicht wird.

Weitere vorteilhafte Ausführungsformen sind in den angefügten Patentansprüchen definiert und gehen auch aus der folgenden detaillierteren Beschreibung weiterer anschaulicher Ausführungsformen hervor, wobei auf die angefügten Zeichnungen Bezug genommen wird, in denen:
Fig. 1a schematisch eine perspektivische Ansicht eines Lagegebers für eine Rotationsmaschine mit einer einzelnen erhabenen Spur gemäß einer Ausführungsform zeigt;
Fig. 1b schematisch eine Draufsicht eines Lagegebers für lineare Bewegung gemäß einer anschaulichen Ausführungsform zeigt;
Fig. 1c und 1d schematisch Querschnittsansichten des Lagegebers aus Fig. 1a gemäß diverser Ausführungsformen zeigen;
Fig. 1e und 1f entsprechend eine Querschnittsansicht bzw. eine Teildraufsicht eines Lagegeber für Rotationsmaschinen in radialer Ausführung gemäß anschaulicher Ausführungsformen zeigen;
Fig. 1g schematisch eine Querschnittsansicht einer Ausführungsform darstellt, in der die Spur in Kunststoffmaterial in Form von geeignet gestalteten "Absenkungen" bzw. Aussparungen gemäß anschaulicher Ausführungsformen vorgesehen ist;
Fig. 1h schematisch eine Querschnittsansicht ist, in der die Beschichtung zur Erzeugung einer gewünschten Leitfähigkeit in Form mehrerer Teilschichten vorgesehen ist;
Fig. 1i und 1j entsprechend eine Draufsicht bzw. eine Querschnittsansicht darstellen, in der das ortsabhängige Wirbelstromerzeugungsverhalten durch eine Höhenänderung der Spur erreicht wird;
Fig. 1k bis 1m schematisch Querschnittsansichten bzw. eine Draufsicht des Lagegebers in Verbindung mit einer Sensorspulenanordnung gemäß anschaulicher Ausführungsformen zeigt;
Fig. 1n schematisch eine Draufsicht des Lagegebers mit mehreren Geberspuren gemäß anschaulicher Ausführungsformen zeigt;
Fig. 2a bis 2c schematisch Querschnittsansichten eines Lagegebers mit einem in einem nicht leitenden Trägermaterial integrierten leitenden Materials zeigt, das eine positionsabhängige Spur bildet gemäß weiterer anschaulicher Ausführungsformen und
Fig. 2d schematisch eine Draufsicht eines Lagegebers zeigt, in welchem eine im Wesentlichen zweidimensionale Strukturierung des leitfähigen Materials zeigt.

Unter Bezugnahme auf die beigefügten Zeichnungen werden nun weitere anschauliche Ausführungsformen der Erfindung beschrieben.

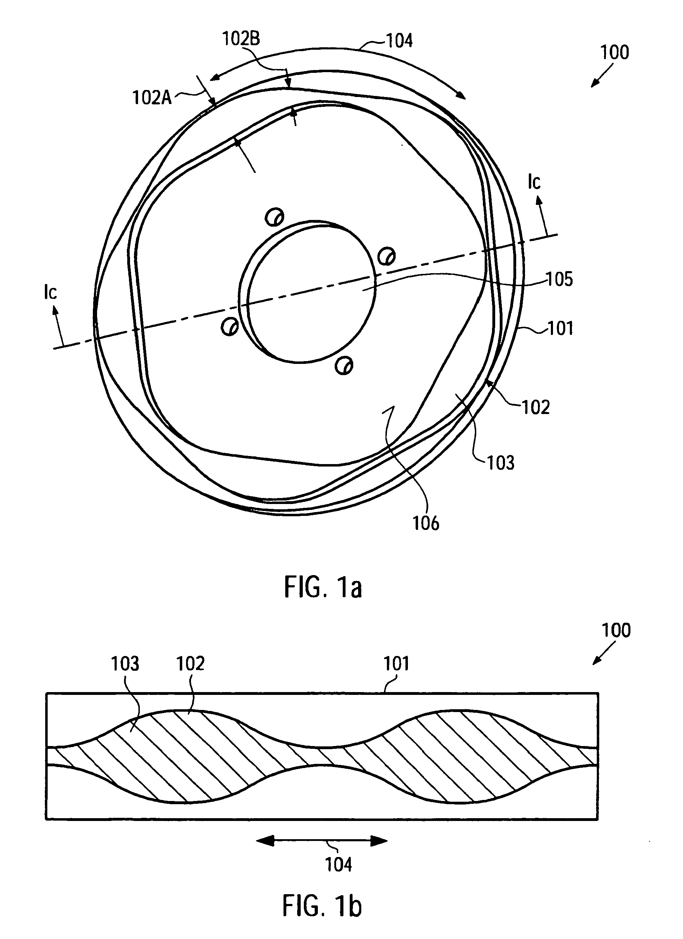

Fig. 1a zeigt schematisch eine perspektivische Ansicht eines Lagegebers 100, der in der dargestellten Ausführungsform zur Bestimmung einer Winkelposition eines Rotors einer Rotationsmaschine, etwa einer elektrischen Maschine, beispielsweise einer permanent erregten Synchronmaschine, etc., vorgesehen ist. Der Lagegeber 100 umfasst einen Grundkörper 101, der in der gezeigten Ausführungsform aus Kunststoff hergestellt ist, wobei eine beliebige geeignete Materialmischung für den Kunststoff verwendet werden kann. Insbesondere können geeignete Materialien verwendet werden, die bei den Drehzahlbereich der entsprechenden Rotationsmaschine die erforderliche mechanische Stabilität aufweisen. Auch kann eine Dicke des Grundkörpers 101, der hier die Form einer Scheibe mit entsprechenden Bohrungen 105 zur Befestigung an einer Drehachse oder einem Rotor der Rotationsmaschine vorgesehen ist, in geeigneter Weise ausgewählt werden, so dass die erforderliche Stabilität erreicht wird und dennoch eine geringe Bauhöhe gewährleistet ist. Die Dicke des Grundkörpers 101 kann beispielsweise einige Millimeter bis zu einigen Zentimetern betragen. Der Lagegeber 100 umfasst ferner eine Oberfläche 106, die beim Betrieb des Lagegebers 100 einer Sensorspulenanordnung zugewandt ist, wie dies später detaillierter beschrieben ist, wobei ein Teil der Oberfläche 106, je nach Ausbildung der jeweiligen Sensorspulenanordnung, im "Abtastbereich" der Spule liegt. In der dargestellten Ausführungsform ist eine Spur 102 in Form einer Erhebung über die Oberfläche 106 vorgesehen, die sich in entlang einer Bewegungsrichtung 104 in der Breite ändert, so dass unterschiedliche Breiten 102a, 102b auftreten und zumindest über einzelne Abschnitte hinweg eine Zuordnung zwischen der Breite 102a, 102b der Spule 102 und einer Strecke entlang der Bewegungsrichtung 104, d. h. in diesem Falle eines Drehwinkels, in eindeutiger Weise gegeben ist. Die Werte für die verschiedenen Breiten 102a, 102b, die die Spur 102 annehmen kann, hängen von dem lateralen Erfassungsbereich der Sensorspulenanordnung ab, wobei typischerweise 1 mm oder weniger für die minimale Breite und einige mm oder deutlich mehr, etwa einige Zentimeter für die maximale Breite angewendet werden können. Ferner ist die Spur 102 in ihrer Form nicht auf eine bestimmte Gestalt eingeschränkt, sofern zumindest innerhalb bestimmter Abschnitte eine eindeutige Zuordnung zwischen der Form bzw. der Modulation des Wirbelstromverhaltens und der Position in der Bewegungsrichtung bzw. Längsrichtung 104 gegeben ist. Z.B. ist eine zusammenhängenden sinus-artige Form dargestellt, wobei auch andere Formen möglich sind, etwa dreieck-artige Gestalten, und dergleichen. Des weiteren umfasst der Lagegeber 100 eine Beschichtung 103, zumindest auf einer zur Oberfläche 106 parallelen Signalfläche der Spur 102, die für die elektrische Leitfähigkeit der Spur 102 sorgt, so dass damit auch die effektive Menge bzw. Oberfläche des leitenden Materials, das für eine Wirbelstromerzeugung bei Abtastung durch eine Sensorspulenanordnung verfügbar ist, entlang der Bewegungsrichtung 104 gemäß der Breite 102a, 102b variiert. Die Beschichtung 103 ist dabei in Form eines beliebigen leitfähigen Materials, beispielsweise eines Metalls, einer Metalllegierung, eines leitenden Halbleiters, eines leitenden Kunststoffs, und dergleichen vorgesehen.

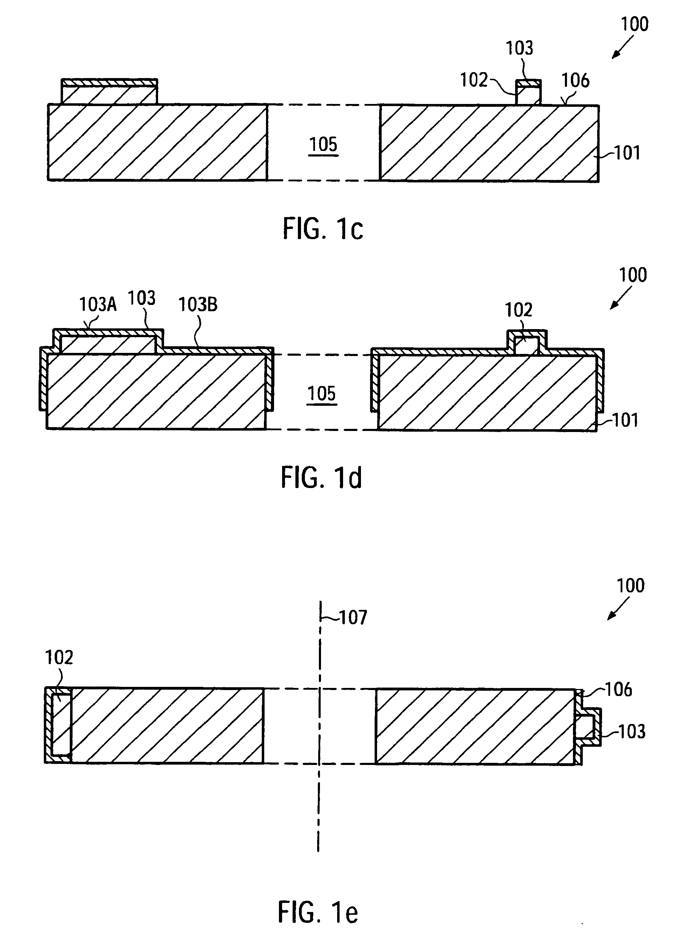

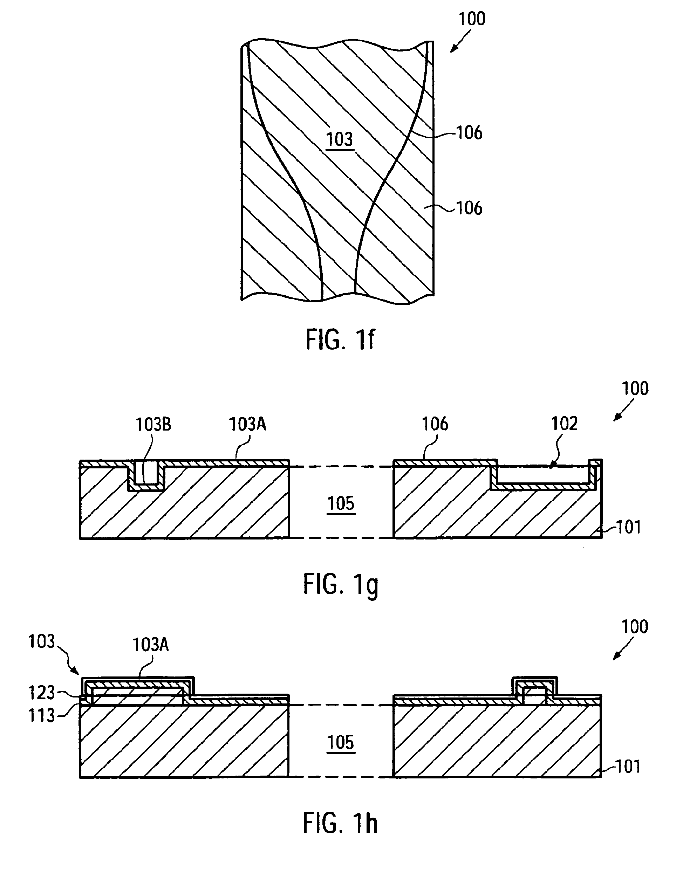

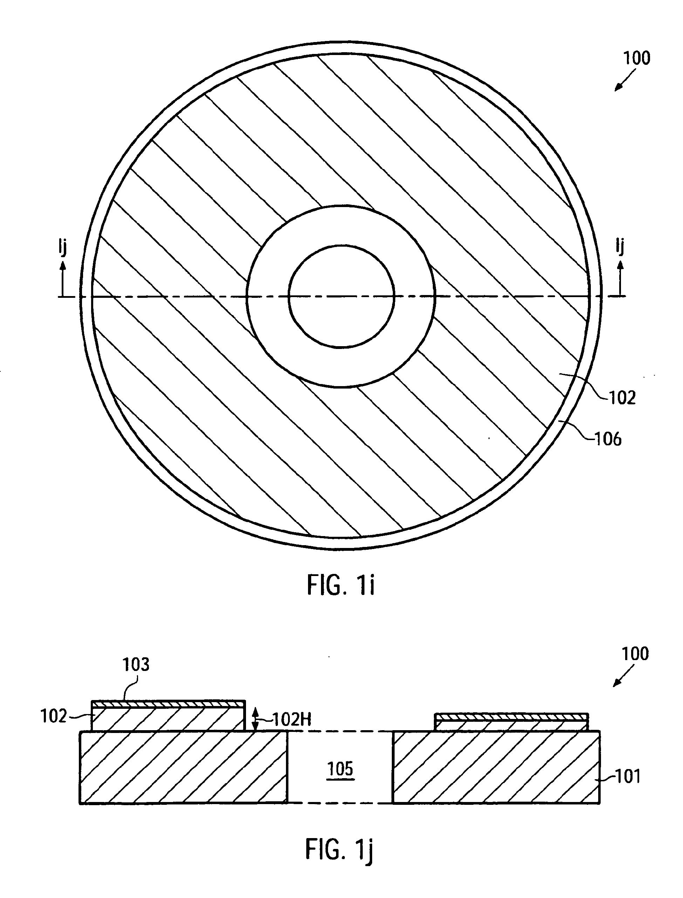

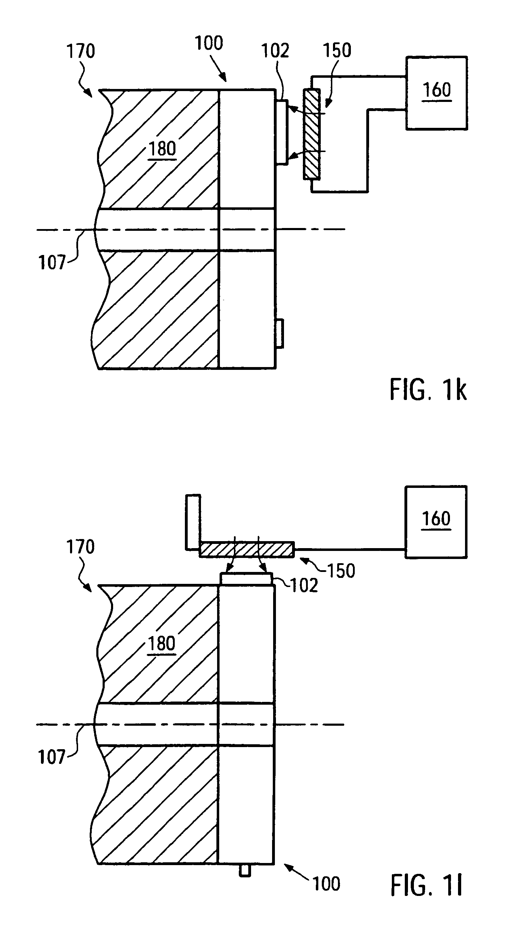

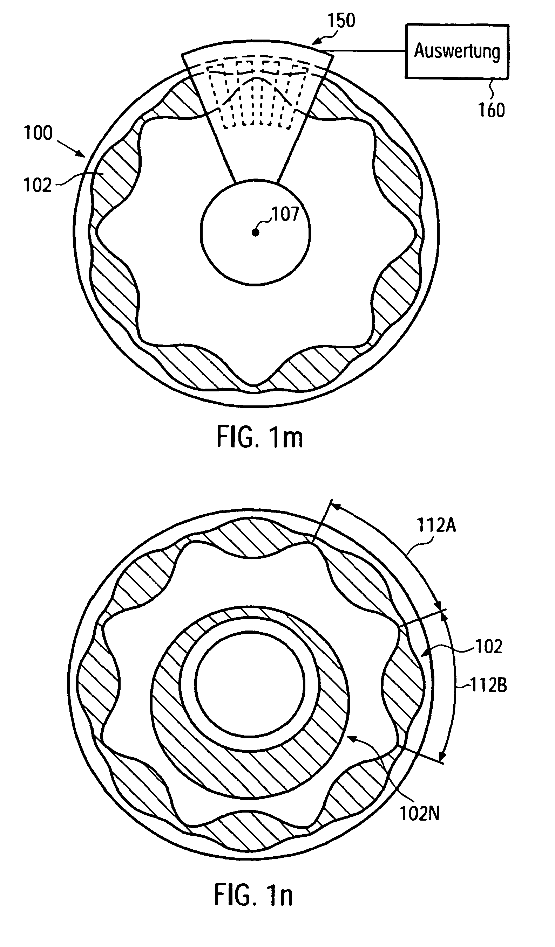

Fig. 1b zeigt schematisch eine Draufsicht eines Lagegebers 100 gemäß einer weiteren Ausführungsform, in der der Lagegeber für die Erfassung der Position entlang einer geradlinigen Bewegungsrichtung 104 ausgebildet ist. In diesem Falle ist der Grundkörper 101 beispielsweise als ein rechteckförmiges Materialstück vorgesehen, das somit die Oberfläche 106 definiert, auf der wiederum die Spur 102 ausgebildet ist. Im Hinblick auf die Auswahl des Kunststoffmaterials für den Grundkörper 101 und die Spur 102 sowie im Hinblick auf die Beschichtung 103 gelten die gleichen Kriterien, wie sie zuvor für den Rotorlagegeber 100 aus Fig. 1 angegeben sind.

Fig. 1c zeigt schematisch eine Querschnittsansicht des Rotorlagegebers 100 aus Fig. 1a gemäß der Schnittlinie Ic. Wie gezeigt, umfasst der Lagegeber 100 den Grundkörper 101 mit der Oberfläche 106 und der darauf ausgebildeten Spur 102. Ferner ist die Beschichtung 103 in der gezeigten Ausführungsform lediglich auf einer zur Oberfläche 106 parallelen Oberfläche der Spur 102 ausgebildet. In anderen Ausführungsformen kann die Beschichtung 103 einen beliebigen Bedeckungsgrad für die Oberfläche 106 und den Grundkörper 101 aufweisen, wie dies nachfolgend detaillierter erläutert wird.

Der Lagegeber 100 kann in effizienter Weise hergestellt werden, indem zunächst der Grundkörper 101 mit der Spur 102 gefertigt wird, was beispielsweise auf der Grundlage von Spritzgussverfahren auf Basis geeigneter Schablonen bewerkstelligt werden kann. In anderen Fällen kann auch die Spur 102 durch Fräsung des Grundkörpers 101 hergestellt werden. In anderen Ausführungsformen kann die Spur 102, wenn diese als zusammenhängende Spur vorgesehen ist, in einem separaten Herstellungsprozess hergestellt werden, indem beispielsweise ein geeignetes Kunststoffmaterial in spezieller Weise gegossen wird oder anderweitig hergestellt wird. Daraufhin kann die Spur 102 dann an dem Grundkörper 101 durch thermische Behandlung, oder andere Verfahren angebracht werden. Auf diese Weise lässt sich eine zuverlässige und reproduzierbare Formgebung des Grundkörpers 101 einschließlich der Spur 102 erreichen, so dass das Funktionsverhalten, d. h. die positionsabhängige Wirbelstromerzeugung im Wesentlichen durch konstruktive Maßnahmen festgelegt ist, wobei sowohl die Flexibilität bei der Auswahl der Materialien für den Grundkörper 101 und die Spur 102 sowie auch bei der Formgebung viele Anwendung direkt berücksichtigt werden können. In anderen Ausführungsformen kann die Spur aus einzelnen von einander getrennten Abschnitten hergestellt sein, die zusammen mit dem Grundkörper 101 oder auch als separate Einheiten hergestellt werden, die anschließend am Grundkörper 101 befestigt werden.

In einigen Ausführungsformen kann dann die Beschichtung 103 hergestellt werden, indem beispielsweise ein geeignetes Material durch Beschichtungsverfahren, etwa durch Aufspritzen, Galvanisieren, chemische Dampfabscheidung, physikalische Dampfabscheidung und dergleichen aufgebracht wird. Dabei kann dies in lokaler Weise erfolgen, so dass, wie in Fig. 1c gezeigt ist, die Beschichtung 103 lediglich auf der Signalfläche, d.h. einer zur Oberfläche 106 parallelen Oberfläche der Spur 102 vorgesehen ist, während in anderen Beschichtungsverfahren eine größerflächige Aufbringung der Beschichtung 103 stattfindet, oder aber ein Teil der Beschichtung anschließend wieder selektiv entfernt wird. In einigen Ausführungsformen kann die Beschichtung 103 ein Metall aufweisen, etwa Kupfer, Aluminium, oder entsprechende Legierungen, so dass eine gewünschte hohe Oberflächenleitfähigkeit in der Beschichtung 103 erhalten werden kann. In anderen Fällen kann ein leitendes Material in der Beschichtung 103 in Form eines dotierten Halbleitermaterials, eines leitfähigen Kunststoffmaterials, und dergleichen vorgesehen werden.

Fig. 1d zeigt schematisch den Lagegeber 100 gemäß einer weiteren Ausführungsform, in der die Beschichtung 103 zumindest die Oberfläche 106 und bei Bedarf auch weitere Oberflächen des Grundkörpers 101 bedeckt. Bei Bedarf kann die Beschichtung 103 den Grundkörper 101 auch nahezu vollständig bedecken, wobei eine über die Spur 103 hinausgehende Bedeckung des Grundkörpers 101 für das Signalverhalten von geringem Einfluss ist, da auf Grund der Erhabenheit der Spur 102 ein ausreichend großer Abstand zwischen der eigentlichen Signalfläche 103a und anderen abgesenkten Oberflächenbereichen 103b gegeben ist, so dass eine deutliche Modulierung des Wirbelstromverhaltens lediglich durch die variierende Breite der Signalfläche 103a erreicht wird. D. h., im linken Teil der Fig. 1d führt die Signalfläche 103a auf Grund ihrer größeren lateralen Ausdehnung zu einer stärkeren Wirbelstromerzeugung bei ansonsten gleichem Abstand zu einer Sensorspulenanordnung im Vergleich zu der Stelle der Spur 102, die im rechten Teil des Lagegebers 100 gezeigt ist, da dort der flächenmäßig sehr große abgesenkte Bereich 103b sehr viel weniger zur Beeinflussung der Sensorspulenanordnung beiträgt, so dass insgesamt die kleinere Signalfläche 103a auf der rechten Seite auch zu einem entsprechend geringeren Wirbelstrom führt.

Fig. 1e zeigt schematisch eine Querschnittsansicht des Lagegebers 100 in einer radialen Ausführungsform, d. h. in einer Ausführungsform, in der die Oberfläche 106 im Wesentlichen parallel zu einer Drehachse 107 des Lagegebers 100 angeordnet ist, während sie in den "axialen" Ausführungsformen, die in Fig. 1a, 1c und 1d gezeigt sind, im Wesentlichen senkrecht zur Drehachse 107 orientiert ist. Wie gezeigt, ist somit die Oberfläche 106 des Grundkörpers 101 im Wesentlichen als eine Zylinderoberfläche ausgebildet, auf der die Spur 102 mit der gewünschten sich in Bewegungsrichtung ändernden Breite vorgesehen ist. Auch für diese Ausführungsform ergeben sich die zuvor genannten Vorteile im Hinblick auf die Herstellung und die Materialauswahl für den Grundkörper 106, die Spur 102 und die Beschichtung 103.

Fig. 1f zeigt schematisch eine Draufsicht auf einen Teil der Oberfläche 106 mit der darin ausgebildeten Spur 102 und der Beschichtung 103.

Fig. 1g zeigt schematisch den Lagegeber 100 gemäß einer weiteren Ausführungsform, in der die Spur 102 in der Oberfläche 106 in Form einer Vertiefung ausgebildet ist, so dass sich beispielsweise im Vergleich zur Fig. 1d ein im Wesentlichen inverses Verhalten ergibt. D. h., in der in Fig. 1g gezeigten Ausführungsform ist in den beiden Positionen auf der linken Seite ein relativ großer Wirbelstrom bei Einwirkung der Sensorspulenanordnung zu erwarten, während auf der rechten Seite auf Grund der größeren lateralen Abmessung der Spur bzw. Vertiefung 102 ein deutlich geringerer Anteil an Wirbelstrom hervorgerufen wird, da eben die leitenden Oberflächen 103a, 103b mit einem ausreichend gro-βen Abstand, beispielsweise von einigen Millimetern, vorgesehen sind. Im Hinblick auf die Herstellung des Grundkörpers 101 und der Spur 102 gelten die gleichen Kriterien, wie sie zuvor angegeben sind. D. h. die Spur 102 in Form der in lateraler Richtung variierenden Vertiefung kann durch beliebige geeignete Verfahren, etwa Spritzgussverfahren, Fräsen, etc. gebildet werden.

Fig. 1h zeigt schematisch den Lagegeber 100 gemäß weiterer Ausführungsformen, in denen die Beschichtung 103 zumindest eine erste Teilschicht 113 und eine zweite Teilschicht 123 aufweist, wobei bei Bedarf auch weitere Schichten vorgesehen werden können. In einer Ausführungsform ist die Teilschicht 113 als leitfähiges Material vorgesehen, das beispielsweise in der gezeigten Ausführungsform ganzflächig zumindest auf der Oberfläche 106 aufgebracht ist. Die Teilschicht 123 ist in der gezeigten Form die äußerste Schicht der Beschichtung 103 ist, und kann dabei als eine geeignete Schutzschicht zur Passivierung der leitenden Schicht 113 dienen. Beispielsweise kann die Schicht 123 als ein beliebiges geeignetes dielektrisches Material gesehen werden, um damit dem leitenden Material in der Schicht 113 eine gewisse gewünschte Eigenschaften, beispielsweise im Hinblick auf chemische Widerstandsfähigkeit, und dergleichen zu verleihen. Z. B. kann die Schicht 123 in Form eines Kunststoffmaterials, etwa als Polymermaterial oder kann auch als anorganische Beschichtung, z. B. in Form von Siliziumdioxid, Aluminiumoxid, Glasmaterialien, Kunststoffen, Polymermaterialien, je nach gewünschter Oberflächenbeschaffenheit, und dergleichen vorgesehen werden. In diesem Falle wird die Beschichtung 123 mit einer ausreichenden Dicke vorgesehen, um einerseits die gewünschte Schutzwirkung zu entfalten und andererseits jedoch den effektiven Abstand zwischen einer Sensorspulenanordnung und der elektrisch wirksamen Oberfläche 103a nicht unnötig zu vergrö-βern. So können geeignete Beschichtungsmaterialien mit einer nahezu beliebigen Schichtdicke von wenigen Mikrometern bis zu einigen 10 oder 100 Mikrometer oder bei Bedarf auch dicker vorgesehen werden. Auch die das leitende Material beinhaltende Teilschicht 113 kann mit einer relativ geringen Schichtdicke vorgesehen werden, da beispielsweise deren mechanische Integrität durch die darüber liegende Schicht 123 gewahrt werden kann. Auf diese Weise lässt sich ein gewünschtes elektrisches Verhalten bei einem geringen Materialaufwand für das leitende Material erreichen, wobei trotzdem eine gewünschte Oberflächenbeschaffenheit des Lagegebers 100 gewährleistet ist. Bei Bedarf können die Schichten 113 und 123 einen unterschiedlichen Bedeckungsgrad auf dem Grundkörper 101 aufweisen, um ggf. das Funktionsverhalten zu verbessern oder Materialkosten einzusparen. Beispielsweise kann das leitende Material der Schicht 113 lediglich auf bestimmten Bereichen, etwa der Signalfläche 103a oder ggf. auf der Oberfläche 106 vorgesehen werden, während die Schicht 123 bei Bedarf über nahezu den gesamten Grundkörper 101 hinweg vorgesehen werden kann, um damit die gewünschte Schutzwirkung zu erreichen.

In anderen Ausführungsformen ist die Schicht 123 ein leitendes Material, während die Schicht 113 als eine Haftschicht dient, die sowohl zum Material des Grundkörpers 101 als zu der darüberliegenden Schicht eine gute Haftung aufweist. Die Schicht 113 kann dabei ein leitfähiges Material oder auch ein isolierendes Material sein.

Fig. 1i zeigt schematisch eine Draufsicht des Lagegebers 100 gemäß einer weiteren Ausführungsform, in der die Spur 102 auf der Oberfläche 106 mit einer nahezu konstanten Breite vorgesehen ist. Die für die Funktion des Lagegebers 100 erforderliche Modulation des Wirbelstromverhaltens wird in dieser Ausführungsform durch eine "Höhenmodulation" der Spur 102 entlang der Bewegungsrichtung erreicht.

Fig. 1j zeigt schematisch eine Querschnittsdarstellung entlang der Schnittlinie lj aus Fig. 1i, wobei eine Position zur Erzeugung eines großen Wirbelstromes (linke Seite) und eine Position zur Erzeugung eines geringen Wirbelstroms (rechte Seite) dargestellt ist. D. h., die Spur 102 besitzt eine Höhe 102h, die entlang der Bewegungsrichtung variiert, so dass ein Abstand der Beschichtung 103 von einer Sensorspulenanordnung ebenfalls variiert und damit das Wirbelstromverhalten positionsabhängig moduliert wird. In dieser Ausführungsform kann die Beschichtung 103 mit dem leitenden Material effizient durch beliebige der zuvor genannten Verfahren aufgebracht werden, während in anderen Ausführungsformen auch eine effiziente Beschichtung mittels eines Folienmaterials erfolgen kann, da insbesondere die relativ konstante Breite der Spur 102 ein Aufbringen mittels einer Walze, etc. ermöglicht.

In einer weiteren anschaulichen Ausführungsform kann die in den Fig. 1i und 1j gezeigte Höhenmodulation der Spur 102 auch wirksam mit einer entsprechenden Variierung der Breite, wie dies in den vorhergehenden Ausführungsformen beschrieben ist, kombiniert werden, so dass eine sehr effiziente und starke positionsabhängige Modulation des Wirbelstromverhaltens entlang der Bewegungsrichtung 104 stattfindet, da sowohl die Höhe, und damit der Abstand, als auch die laterale Abmessung des leitenden Materials der Beschichtung 103 variiert. Auf diese Weise ergibt sich ein große Änderungsrate der Wirbelstromantwort bei Änderung der Position in der Bewegungsrichtung, so dass benachbarte Stellen ein deutlich unterschiedliches Signal ergeben.

Fig. 1k zeigt schematisch eine Anordnung des Lagegebers 100 gemäß einer axialen Ausführungsform, wie sie etwa in der Fig. 1a dargestellt ist, wobei der Lagegeber 100 an einer Rotationsmaschine 170, etwa einer elektrische Maschine, angebracht ist. D. h., der Lagegeber 100 ist mechanisch mit einem Rotor 180 der Maschine 170 gekoppelt, so dass er um die Rotationsachse 107 rotiert. Ferner ist eine Sensorspulenanordnung 150 axial beabstandet zur Spule 102 ortsfest angebracht, so dass eine Wechselwirkung zwischen der Spur 102, d. h. durch die angebrachte Beschichtung 103 und eine oder mehrere Spulen in der Anordnung 150, hervorgerufen wird, wobei auf Grund der ortsabhängigen Bedämpfung der einen oder mehreren Spulen in der Anordnung 150 ein entsprechendes Signal für eine Auswerteeinheit 160 zur Verfügung steht.

Fig. 1l zeigt schematisch den Lagegeber 100 gemäß einer radialen Ausführungsform, wie sie beispielsweise in Fig. 1e gezeigt ist, wobei nun die Spur 102 senkrecht zur Rotationsachse 107 durch die Sensorspulenanordnung 150 ausgelesen wird.

Fig. 1m zeigt schematisch eine Draufsicht des Lagegebers 100 mit einer entsprechenden Sensorspulenanordnung 150 in einer axialen Anordnung, d. h. die Rotationsachse 107 ist im Wesentlichen senkrecht zur Oberfläche 106 orientiert.

Fig. 1n zeigt schematisch den Lagegeber 100 gemäß weiterer Ausführungsformen, in denen zumindest eine weitere Spur 102n vorgesehen ist, deren Wirbelstromverhalten sich entlang der Bewegungsrichtung positionsabhängig ändert. Auf diese Weise lässt sich mehr Positionsinformation ermitteln, indem beispielsweise die Spuren 102, 102n einen unterschiedlichen Längenmessbereich repräsentieren. In der dargestellten Ausführungsform weist beispielsweise die Spur 102 mehrere sich periodisch wiederholende Abschnitte 112a, ..., 112b auf, die für die Sensorspulenanordnung als identische Einheit erscheinen, die aber auf Grund der großen räumlichen Modulation innerhalb jedes Abschnitts 112a, 112b eine gewünschte hohe Ortsauflösung ermöglichen. Andererseits besitzt die Spur 102n ein geringeres Ortsauflösevermögen, d. h. die Änderung des Wirbelstromverhaltens entlang der Bewegungsrichtung 104 ist weniger ausgeprägt, jedoch ergibt sich eine größere Messstrecke, d. h. in dem gezeigten Beispiel ein größerer Winkelbereich, der ggf. einen vollen Umfang von 360 Grad umfassen kann. Die Spur 102n kann in der gleichen Weise hergestellt werden wie die Spur 102, so dass sich auch in diesem Falle ein hohes Maß an Reproduzierbarkeit und Präzision erreichen lässt. Insbesondere kann durch die konstruktive Festlegung der Spuren 102, 102n ein geringer räumlicher Abstand zwischen den Spuren erreicht werden, so dass sich eine hohe "Informationsdichte" bei vorgegebener Größe der Oberfläche 106 bzw. des Grundkörpers 101 erreichen lässt.

Es sollte beachtet werden, dass eine entsprechende Ausbildung mit mehreren Spuren 102, 102n auch in einer radialen Ausführungsform vorgesehen werden kann oder es kann eine gemischte Ausführungsform bereitgestellt werden, in der eine oder mehrere Spuren als Axialspuren vorgesehen sind, wie dies in Fig. 1n gezeigt ist, während eine oder mehrere Spuren als radiale Spuren vorgesehen werden können, wie dies beispielsweise in Fig. 1i für eine einzelne Spur gezeigt und erläutert ist.

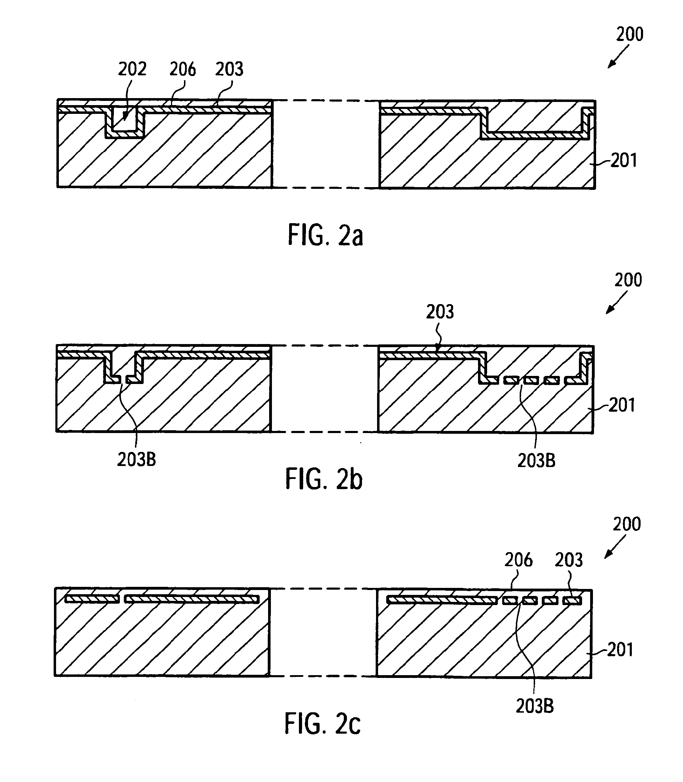

Mit Bezug zu den Fig. 2a bis 2d werden nunmehr weitere anschauliche Ausführungsformen beschrieben, in denen eine effiziente Strukturierung des Wirbelstromverhaltens in einem Grundkörper des Lagegebers erreicht wird, wobei dieser in anschaulichen Ausführungsformen im Wesentlichen aus einem nicht leitfähigen Trägermaterial aufgebaut ist, der ein leitfähiges Material umschließt.

Fig. 2a zeigt schematisch einen Querschnitt eines Lagegebers 200, der in der gezeigten Version als ein axialer Rotorlagegeber vorgesehen ist. Der Lagegeber 200 umfasst einen Grundkörper 201, der in der gezeigten Ausführungsform zum überwiegenden Teil aus einem nicht leitenden Material, etwa Kunststoff, aufgebaut ist, in welchem ein leitfähiges Material 203 lokal so eingebracht ist, dass damit eine Spur 202 definiert wird, die zu dem gewünschten positionsabhängigen Wirbelstromverhalten führt, wie dies zuvor erläutert ist. Ferner ist in der gezeigten Ausführungsform eine Oberfläche 206 ausgebildet, die das leitfähige Material 203 zumindest über der Spur 202 abdeckt. In der gezeigten Ausführungsform ist das leitende Material 203 z. B. in Form eines profilierten Materialstücks, beispielsweise eines metallenthaltenden Materialstücks, vorgesehen, was in einigen anschaulichen Ausführungsformen eine moderat hohe Eigenstabilität aufweist, so dass sich durch das Vorsehen des leitfähigen Materials 203 auch eine Verbesserung der mechanischen Stabilität des Körpers 201 erreichen lässt, selbst wenn dieser mit einer moderat geringen Dicke vorgesehen ist. Beispielsweise kann das leitfähige Material 203 in Form eines Metallbleches, das in geeigneter Weise, z. B. durch Stanzen, profiliert ist, vorgesehen werden, das dann in geeigneter Weise in das Material des Grundkörpers 201 eingebracht wird. Dazu kann beispielsweise das leitende Material 203 in der eigenstabilen Form umspritzt werden, wobei bei Bedarf das leitende Material 203 vollständig von den Kunststoffmaterialien ummantelt ist. D. h., in diesem Falle ergibt sich eine nicht profilierte Oberfläche 206, die ggf. Handhabung und die Montage des Lagegebers 200 vereinfacht und außerdem für einen entsprechenden Schutz des leitenden Materials 203 sorgt. Andererseits wird die gewünschte Modulation des Wirbelstromverhaltens durch die Profilierung des Materials 203 in effizienter und reproduzierbarer Weise erreicht. Dabei kann die Materialstärke für die Oberfläche 206 über dem leitenden Material 203 in geeigneter Weise so gering eingestellt werden, dass sich die gewünschte Schutzwirkung erreichen lässt und ein entsprechender "Luftspalt" zu einer Sensorsspulenanordnung dennoch auf einem geringen Wert gehalten wird. Es sollte beachtet werden, dass in anschaulichen Ausführungsformen das nicht leitende Material des Grundkörpers 201 in Form der Oberfläche 202 nicht notwendigerweise das gesamte leitende Material 203 abdeckt, sondern nur zur Erreichung einer im Wesentlichen planen Oberfläche dient, wobei erhabene Bereiche des leitenden Materials 203 einen Teil der Oberfläche 202 bilden. Ferner ist zu beachten, dass die Spur 202 auch durch "erhabene" Bereiche innerhalb des Grundkörpers definiert sein kann.

Fig. 2b zeigt schematisch den Lagegeber 200 in einer weiteren Ausführungsform, in der entsprechende Bohrungen 203b in abgesenkten Bereichen des leitenden Materials 203 vorgesehen sind, so dass beispielsweise bei einer Umspritzung des leitenden Materials 203 eine effiziente "Verzahnung" des Kunststoffmaterials mit dem leitenden Material 203 stattfinden kann, ohne dass eine wesentlichen Auswirkung auf das Wirbelstromverhalten stattfindet, da die abgesenkten Bereiche ohnehin kaum zum Wirbelstromverhalten beitragen. Auf diese Weise lässt sich die räumliche Definition der Bahn 202 in effizienter Weise durch ein profiliertes Material beibehalten, wobei dennoch durch die Bohrungen 203b eine hohe Stabilität des Grundkörpers 201 erreicht wird.

Fig. 2c zeigt schematisch eine Querschnittsdarstellung des Lagegebers 200 gemäß einer weiteren anschaulichen Ausführungsform, in der das leitende Material 203 dem Grundkörper 201 in einer im Wesentlichen "zweidimensionalen" oder planen Anordnung vorgesehen ist, wobei eine entsprechende Strukturierung oder Modulierung des Wirbelstromverhaltens auf der Grundlage entsprechender Aussparungen oder Bohrungen 203b erreicht wird. Beispielsweise ist in einer Ausführungsform das leitende Material 203 in Form eines leitenden Materialstücks, das vorteilhafterweise eigenstabil ist, vorgesehen, wobei die Bohrungen 203b so entlang der Bewegungsrichtung vorgesehen sind, das damit in effizienter Weise die Menge des effektiv wirkenden leitenden Materials postionsabhängig variiert. Beispielsweise ergibt sich auf der linken Seite der Fig. 2c auf Grund einer geringen Anzahl an Bohrungen 203b ein hoher Füllgrad des leitenden Materials 203 und damit eine entsprechende große Wirbelstromerzeugung, während auf der rechten Seite der Fig. 2c ein deutlich geringerer Füllgrad an leitendem Material 203 zu einer deutlich geringeren Wirbelstrombildung führt.

Der Lagegeber 200 aus Fig. 2c kann auf Grundlage beliebiger geeigneter Verfahren hergestellt werden, beispielsweise durch Umspritzen des leitenden Materials 203, wobei wiederum die Bohrungen 203b zu einer effizienten Verzahnung des nicht leitenden Materials des Grundkörpers 201, das den wesentlichen Anteil bildet, mit dem leitenden Material 203 führt. Auf diese Weise können sehr stabile Lagegeber hergestellt werden, die auch für sehr hohe Drehzahlen geeignet sind.

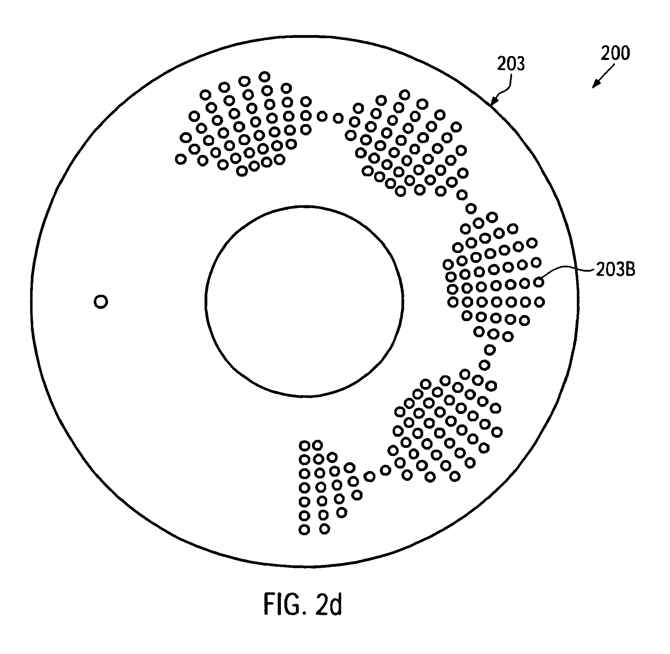

Fig. 2d zeigt schematisch eine Draufsicht auf das leitende Material 203, wie es beispielsweise in der Ausführungsform aus Fig. 2c verwendet werden kann, wobei die Bohrungen 203b für eine entlang der Bewegungsrichtung positionsabhängige Wirbelstromantwort sorgen.

In weiteren Ausführungsformen ist eine radiale Anordnung vorgesehen, in der das leitende Material 203 an der Stirnseite des Grundkörpers 201 vorgesehen ist, wobei jedoch eine Oberfläche ohne ausgeprägte Topologie ähnlich zu der Oberfläche 206 entsteht. Wenn das leitende Material 203 auch zur Erhöhung der Stabilität des Grundköpers dient, kann dieses auch in der radialen Ausführungsform in geeigneter Weise sich über einen größeren Bereich des Grundkörpers erstreckend vorgesehen werden, ähnlich wie dies in den Figuren 2a bis 2c gezeigt ist, wobei allerdings eine Modulation zur Erzeugung einer Spur mit Ausnahme am Rand, der bei radialen Ausführungsform von einer Sensorspule abgetastet wird, nicht erforderlich ist. In weiteren Ausführungsformen kann auch eine Kombination aus radialer und axialer Version verwendet werden, wenn mehr als eine Spur erforderlich ist. In anderen Ausführungsformen können mehrere Spuren in nur axialer oder nur radialer Gestaltung vorgesehen werden.

Die vorliegende Erfindung stellt somit Lagegeber bereit, in denen der Grundkörper im Wesentlichen aus einem nicht leitenden Material und insbesondere aus Kunststoffmaterial aufgebaut ist, wobei sich die positionsabhängige Wirbelstromerzeugung in sehr effizienter und reproduzierbarer Weise erreichen lässt, indem in einigen Aspekten eine geeignete Spur auf der Oberfläche des Grundkörpers durch Erhebungen und/oder Einsparungen gebildet wird, in der dann eine geeignete Beschichtung aufgebracht werden kann oder in anderen anschaulichen Ausführungsformen eine geeignete Profilierung eines elektrisch leitenden Materials innerhalb eines im Wesentlichen aus Kunststoff hergestellten Grundkörpers erfolgt. Die Gestaltung des Grundkörpers und der dazugehörigen Spur ermöglicht den Aufbau des Lagegebers in nahezu beliebiger geeigneter Größe entsprechend der jeweiligen Anwendung, d.h., Länge bzw. Durchmesser können effizient der Größe des sich bewegenden Teils oder dessen Form angepasst werden, wobei sich bei der Herstellung ein geringer Aufwand bei gleichzeitig geringen Fertigungstoleranzen verwirklichen lassen.

## Patentansprüche

1. Lagegeber zur Erzeugung positionsabhängiger Wirbelstromverluste in einer Sensorspulenanordnung, mit:
einem aus Kunststoff aufgebauten Grundkörper mit einer beim Betrieb in Richtung der Sensorspulenanordnung zu orientierenden Oberfläche,
einer in dem Grundkörper durch Erhebungen in der Oberfläche aus Kunststoff gebildeten Spur, die sich entlang einer vorbestimmten Bewegungsrichtung erstreckt und zumindest in einer zur vorbestimmten Bewegungsrichtung senkrechten Richtung variiert, und
einer Beschichtung, die zumindest auf der Spur vorgesehen ist und ein leitfähiges Material aufweist.

2. Lagegeber nach Anspruch 1, wobei eine Höhe der Spur entlang der vorbestimmten Bewegungsrichtung konstant ist und eine Breite der Spur entlang der vorbestimmten Bewegungsrichtung variiert.

3. Lagegeber nach Anspruch 1, wobei eine Höhe der Spur entlang der vorbestimmten Bewegungsrichtung variiert.

4. Lagegeber nach Anspruch 3, wobei eine Breite der Spur entlang der vorbestimmten Bewegungsrichtung variiert.

5. Lagegeber nach einem der Ansprüche 1 bis 4, wobei die vorbestimmte Bewegungsrichtung eine Drehbewegung ist.

6. Lagegeber nach Anspruch 5, wobei der Grundkörper ausgebildet ist, an einem Rotor oder einem damit gekoppelten Element einer Rotationsmaschine befestigt zu werden.

7. Lagegeber nach Anspruch 6, wobei die Oberfläche senkrecht zu einer Drehachse des Rotors orientiert ist.

8. Lagegeber nach Anspruch 6, wobei die Oberfläche parallel zu einer Drehachse des Rotors orientiert ist.

9. Lagegeber nach einem der vorhergehenden Ansprüche, wobei die Beschichtung zumindest teilweise auf der Oberfläche vorgesehen ist.

10. Lagegeber nach Anspruch 9, wobei die Beschichtung auf zumindest einer weiteren Oberfläche des Grundkörpers vorgesehen ist.

11. Lagegeber nach einem der vorhergehenden Ansprüche, wobei die Beschichtung ein leitendes Halbleitermaterial aufweist.

## Claims

1. Position detector for generating position-dependent eddy current losses in a sensor coil arrangement with:
a base body made of plastic with a surface to be oriented during operation towards the sensor coil arrangement
a track in the base body formed by raised areas in the surface made of plastic which extends along a predetermined direction of motion and
varies in at least one direction perpendicular to the direction of motion,
and
a coating that is provided at least on the track and has a conducting material.

2. Position detector according to Claim 1, wherein a height of the track along the predetermined direction of motion is constant and a width of the track varies along the predetermined direction of motion.

3. Position detector according to Claim 1, wherein a height of the track varies along the predetermined direction of motion.

4. Position detector according to Claim 3, wherein a width of the track varies along the predetermined direction of motion.

5. Position detector according to any one of the Claims 1 to 4, wherein the predetermined direction of motion is a rotation motion.

6. Position detector according to Claim 5, wherein the base body is designed to be attached to a rotor or to a member of a rotary machine connected thereto.

7. Position detector according to Claim 6, wherein the surface is oriented perpendicular to an axis of rotation of the rotor.

8. Position detector according to Claim 6, wherein the surface is oriented parallel to an axis of rotation of the rotor.

9. Position detector according to any one of the preceding claims, wherein the coating is provided at least in part on the surface.

10. Position detector according to Claim 9, wherein the coating is provided on at least a further surface of the base body.

11. Position detector according to any one of the preceding claims, wherein the coating has a conducting semiconductor material.

## Revendications

1. Capteur de position pour générer des pertes par courants de Foucault en fonction de la position dans un agencement à bobines de capteur, comprenant :
un corps de base constitué en matière plastique avec une surface à orienter durant le fonctionnement en direction de l'agencement à bobines de capteur,
une voie en matière plastique constituée dans le corps de base par un rehaussement dans la surface, qui s'étend selon une direction de déplacement prédéterminée et varie au moins dans une direction perpendiculaire à la direction de déplacement prédéterminée, et
un revêtement pourvu au moins sur la voie et comportant un matériau conducteur.

2. Capteur de position selon la revendication 1, dans lequel une hauteur de la voie le long de la direction de déplacement prédéterminée est constante et une largeur de la voie le long de la direction de déplacement prédéterminée varie.

3. Capteur de position selon la revendication 1, dans lequel une hauteur de la voie le long de la direction de déplacement prédéterminée varie.

4. Capteur de position selon la revendication 3, dans lequel une largeur de la voie le long de la direction de déplacement prédéterminée varie.

5. Capteur de position selon l'une des revendications 1 à 4, dans lequel la direction de déplacement prédéterminée est une rotation.

6. Capteur de position selon la revendication 5, dans lequel le corps de base est conçu pour être fixé à un rotor, ou à un élément qui y est accouplé, d'une machine rotative.

7. Capteur de position selon la revendication 6, dans lequel la surface est orientée perpendiculairement à un axe de rotation du rotor.

8. Capteur de position selon la revendication 6, dans lequel la surface est orientée parallèlement à un axe de rotation du rotor.

9. Capteur de position selon l'une quelconque des revendications qui précèdent, dans lequel le revêtement est pourvu au moins en partie sur la surface.

10. Capteur de position selon la revendication 9, dans lequel le revêtement est pourvu sur au moins une autre surface du corps de base.

11. Capteur de position selon l'une quelconque des revendications qui précèdent, dans lequel le revêtement comporte un matériau semiconducteur conducteur.
